# EUROPEAN PATENT SPECIFICATION

(11) **EP 3 354 410 B1**
(45) Date of publication and mention of the grant of the patent: **28.07.2021**
(21) Application number: 18151754.1
(22) Date of filing: 16.01.2018
(51) Int. Cl.: B25F 5/00, B23D 47/12

(54) **ELECTRIC TOOL**
ELEKTROWERKZEUG
OUTIL ÉLECTRIQUE

(30) Priority: 24.01.2017 CN 201710053549
(43) Date of publication of application: 01.08.2018
(73) Proprietor: Nanjing Chervon Industry Co., Ltd., 211106 Nanjing Jiangsu (CN)
(72) Inventor: WANG, Hongwei, Nanjing, Jiangsu 211106 (CN); XU, Qian, Nanjing, Jiangsu 211106 (CN)
(74) Representative: Sun, Yiming

(56) References cited:
- EP-A1- 2 944 432
- WO-A1-2016/194535
- WO-A2-2013/081191

## Description

### TECHNICAL FIELD

The present disclosure relates to an electric tool, and particularly relates to an electric tool which can be connected to different power supplies.

In particular the invention relates to an electric tool, comprising: a motor comprising a first phase winding, a second phase winding and a third phase winding; a power circuit configured to selectively connect a first power supply and a second power supply for supplying power for the motor and comprising an output anode and an output cathode.

### BACKGROUND

WO 2016/194535 A1 and EP 3 306 808 A1 each disclose an electric tool of the generic type specified above.

Existing electric tools include two categories. One category is powered by an alternating current power supply, and the other category is powered by a direct current power supply. The tools powered by the alternating current power supply generally only can be used in places closer to a socket of the power supply, and it is inconvenient to use the electric tools within a working range away from the socket of the power supply. The direct current power supply needs to be configured for supplying power, so that alternating current electric tools can be operated in places away from the socket of the power supply.

For the electric tools powered by the direct current power supply, since electric energy reserve of the direct current power supply is limited, when the electric energy of the direct current power supply is used up, it will be very convenient for users if the alternating current power supply can be connected or a direct current power supply having enough electric energy can be selected to enable the electric tools to continue to complete operation.

Therefore, an electric tool which can be connected to different voltage inputs needs to be designed.

WO 2016/194535 A1 and EP 3 306 808 A1 each disclose a power tool capable of suppressing variations in motor characteristics between external power sources with different voltage. The power tool includes: A motor including a stator on which a plurality of windings are wound and a rotor rotatable relative to the stator; an output unit driven by rotation of the rotor; a power source connection part connectable to an external power source serving as a driving power source of the motor; power source voltage detecting means configured to perform detecting a voltage of the external power source connected to the power source connection part; and connection form changing means configured to perform changing a connection form of the plurality of windings on the basis of the voltage of the external power source.

EP 2 944 432 A1 discloses a power tool including a motor, a first battery pack, a second battery pack, a first switching element coupled between the first battery pack and the motor, a second switching element coupled between the second battery pack and the motor, and controller coupled to the first switching element and the second switching element. The controller includes a first pulse-width modulation (PWM) output coupled to the first switching element and a first PWM signal to selectively close the first switching element. The controller further includes a second PWM output coupled to the second switching element and a second PWM signal to selectively close the second switching element.

### SUMMARY

To solve defects of an existing art, a purpose of the present disclosure is to provide an electric tool which can be connected to different voltage inputs.

To realize the above purpose, the present disclosure adopts the following technical solution.

An electric tool includes: a motor including a first phase winding, a second phase winding and a third phase winding;
a power circuit configured to selectively connect a first power supply and a second power supply for supplying power for the motor and including an output anode and an output cathode; a connecting circuit including: a first connecting circuit including a first switch and a second switch, wherein one of two connecting ends of the first phase winding is connected between the first switch and the second switch; a second connecting circuit including a third switch and a fourth switch, wherein the other one of two connecting ends of the first phase winding is connected between the third switch and the fourth switch; a third connecting circuit including a fifth switch and a sixth switch, wherein one of two connecting ends of the second phase winding is connected between the fifth switch and the sixth switch; and a fourth connecting circuit including a seventh switch and an eighth switch, wherein one of two connecting ends of the third phase winding is connected between the seventh switch and the eighth switch; and a signal source configured to send a first control signal, when the power circuit accesses the first power supply, successively to the first switch, the second switch, the third switch, the fourth switch, the fifth switch, the sixth switch, the seventh switch and the eighth switch so that every two of the three phase windings are in sequence connected between the output anode and the output cathode, the three phase windings forming a Y-shaped connection, and send a second control signal, when the power circuit accesses the second power supply, successively to the first switch, the second switch, the third switch, the fourth switch, the fifth switch, the sixth switch, the seventh switch and the eighth switch so that each of the three phase windings are in sequence connected between the output anode and the output cathode, the three phase windings forming a triangle-shaped connection; wherein the connecting circuit is electrically connected with the power circuit and the motor, and the signal source is electrically connected with the connecting circuit.

Further, a voltage of the first power supply accessed by the power circuit is greater than a voltage of the second power supply accessed by the power circuit.

Further, the first power supply accessed by the power circuit is an alternating current power supply, and the second power supply accessed by the power circuit is a direct current power supply.

Further, the signal source includes a controller or a relay.

The present disclosure has a beneficial effect that an electric tool which can be connected to different voltage inputs is provided. The electric tool has basically the same output properties when connected to power supplies with different voltages.

### BRIEF DESCRIPTION OF DRAWINGS

Fig. 1 is a schematic structural diagram illustrating a miter saw as one of embodiments;
Fig. 2 is a schematic diagram illustrating connection of an internal structure of the miter saw in Fig. 1;
Fig. 3 is a schematic diagram illustrating connection connecting a circuit and a winding in Fig. 2;
Fig. 4 is a schematic diagram illustrating connection of another internal structure of the miter saw in Fig. 1; and
Fig. 5 is a schematic structural diagram illustrating a relay in Fig. 4.

### DETAILED DESCRIPTION

The present disclosure is described in detail below in combination with drawings and specific embodiments.

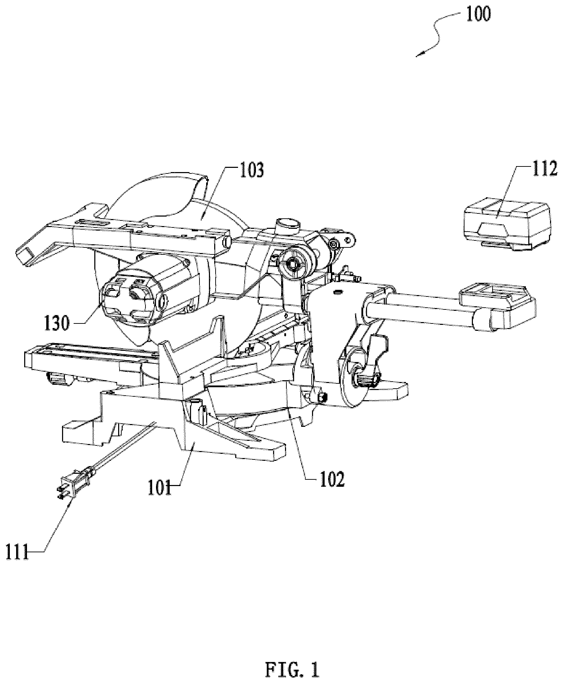

By referring to an electric tool 100 shown in Fig. 1 to Fig. 3, to facilitate description, a miter saw is used as one of embodiments of the electric tool for illustration.

The miter saw includes: a base 101, a working table 102, a saw blade 103, a power circuit 110, a connecting circuit 120 and a motor 130. The base 101 is configured to support the working table 102. The miter saw can be stably placed on ground or an operating plane. The working table 102 is rotatably connected to the base 101, and is configured to place a processing piece. The saw blade 103 is pivotably connected with the working table 102 through a bracket, and is configured to cut the processing piece. The motor 130 is configured to supply a power source. The motor 130 drives the saw blade 103 to cut the processing piece placed on the working table 102.

An integral structure of the miter saw is roughly the same as a general miter saw structure, and is not repeated in detail herein.

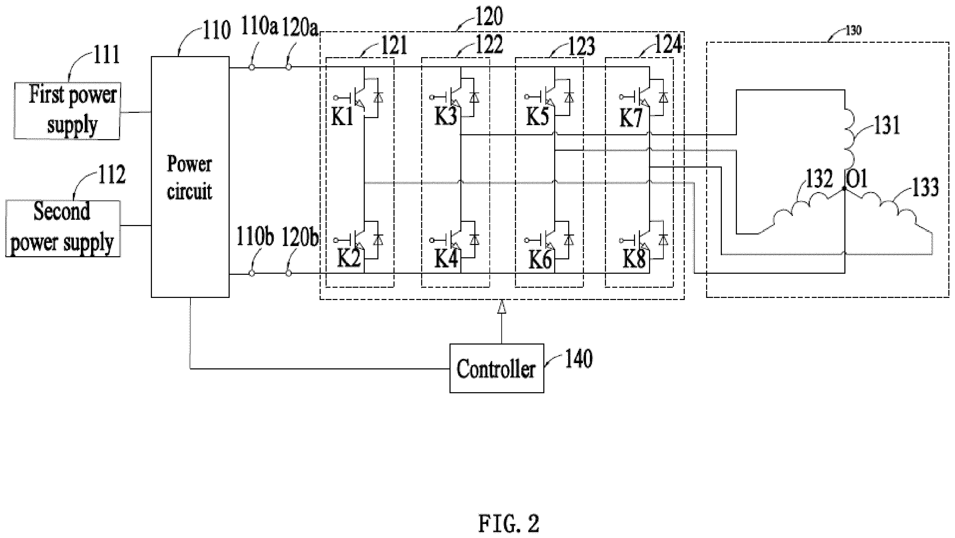

Fig. 2 is a block diagram illustrating connection of an internal circuit of a miter saw. The power circuit 110 is configured to selectively access a first power supply 111 and a second power supply 112 for supplying power for the motor 130, wherein the power circuit 110 includes an output anode 110a and an output cathode 110b; the first power supply 111 and the second power supply 112 are electrically connected with the power circuit 110; and electric energy of the first power supply 111 and/or the second power supply 112 is converted by the power circuit 110 so that a voltage between the output anode 110a and the output cathode 110b is a preset value.

As a possible embodiment, the first power supply 111 is a battery pack having a first voltage value and the second power supply 112 is a battery pack having a second voltage value, wherein the first voltage value is greater than or equal to the second voltage value. Specifically, the first power supply 111 and the second power supply 112 are detachable battery packs.

As another possible embodiment, the first power supply 111 is an alternating current power supply having the first voltage value, and the second power supply 112 is a direct current power supply having the second voltage value. Specifically, a value range of the first voltage value is 210V to 230V, and a value range of the second voltage value is 110V to 130V. The first power supply 111 and the second power supply 112 access alternating current commercial power through respective corresponding alternating current plugs.

As another possible embodiment, the first power supply 111 accessed by the power circuit 110 is an alternating current power supply, and the second power supply 112 accessed by the power circuit 110 is a direct current power supply. Specifically, the power circuit 110 includes a first power supply 111 access port, a second power supply 112 access port, and a voltage conversion circuit. The first power supply 111 access port accesses the first power supply 111, and the second power supply 112 access port accesses the second power supply 112. The electric energy of the first power supply 111 accessed by the first power supply 111 access port is converted, through the voltage conversion circuit, into direct current voltage having a preset voltage value for output. More specifically, the voltage conversion circuit may be a rectification circuit including four semiconductor elements, and can convert alternating current into direct current for output. It should be noted that the access of the first power supply 111 and/or the second power supply 112 by the power circuit 110 includes direct accessing or indirect accessing.

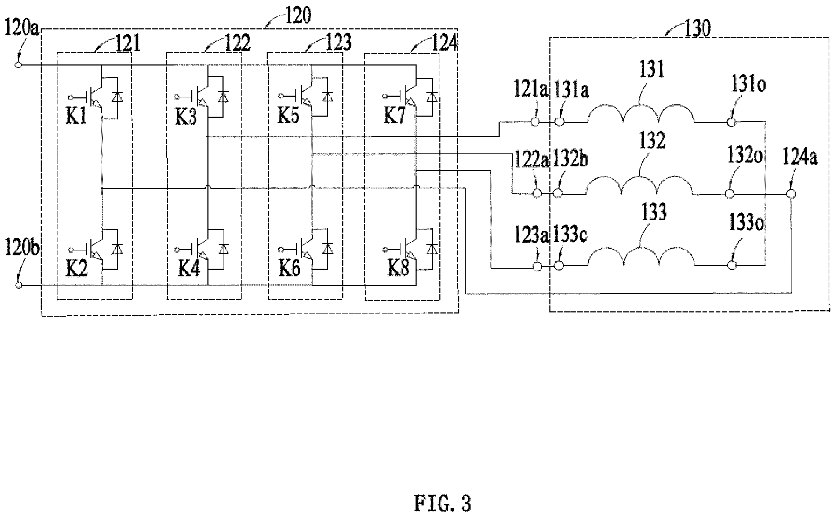

As shown in Fig. 3, the connecting circuit 120 includes an input anode 120a electrically connected with the output anode 110a, an input cathode 120b connected with the output cathode 110b, a first terminal 121a, a second terminal 122a, a third terminal 123a and a fourth terminal 124a. The connecting circuit 120 includes a first connecting circuit 121, a second connecting circuit 122, a third connecting circuit 123 and a fourth connecting circuit 124, wherein the first connecting circuit 121 includes a first switch K1 and a second switch K2; the second connecting circuit 122 includes a third switch K3 and a fourth switch K4; the third connecting circuit 123 includes a fifth switch K5 and a sixth switch K6; and the fourth connecting circuit 124 includes a seventh switch K7 and an eighth switch K8.

Specifically, the first switch K1, the second switch K2, the third switch K3, the fourth switch K4, the fifth switch K5, the sixth switch K6 and the eighth switch K8 are semiconductor switches, such as IGBT, MOSFET or semiconductor switches composed of triodes and diodes. All the above switches are MOSFET is taken as an embodiment for description below, and each of the switches has respective source electrode, gate electrode and drain electrode.

As shown in Fig. 3, in the first connecting circuit 121, the drain electrode of the first switch K1 is connected to the input anode 120a; the source electrode of the second switch K2 is connected to the input cathode 120b; the source electrode of the first switch K1 is connected with the drain electrode of the second switch K2; and the fourth terminal 124a is connected between the source electrode of the first switch K1 and the drain electrode of the second switch K2. In the second connecting circuit 122, the drain electrode of the third switch K3 is connected to the input anode 120a; the source electrode of the fourth switch K4 is connected to the input cathode 120b; the source electrode of the third switch K3 is connected with the drain electrode of the fourth switch K4; and the first terminal 121a is connected between the source electrode of the third switch K3 and the drain electrode of the fourth switch K4. In the third connecting circuit 123, the drain electrode of the fifth switch K5 is connected to the input anode 120a; the source electrode of the sixth switch K6 is connected to the input cathode 120b; the source electrode of the fifth switch K5 is connected with the drain electrode of the sixth switch K6; and the second terminal 122a is connected between the source electrode of the fifth switch K5 and the drain electrode of the sixth switch K6. In the fourth connecting circuit 124, the drain electrode of the seventh switch K7 is connected to the input anode 120a; the source electrode of the eighth switch K8 is connected to the input cathode 120b; the source electrode of the seventh switch K7 is connected with the drain electrode of the eighth switch K8; and the third terminal 123a is connected between the source electrode of the seventh switch K7 and the drain electrode of the eighth switch K8. The gate electrodes of the first switch K1, the second switch K2, the third switch K3, the fourth switch K4, the fifth switch K5, the sixth switch K6, the seventh switch K7 and the eighth switch K8 are connected to a controller 140 for receiving a control signal input by the controller 140.

The motor 130 includes a first-phase winding 131, a second-phase winding 132 and a third-phase winding 133, wherein the first-phase winding has a first connecting end 131a and a second connecting end 131o; the second-phase winding has a third connecting end 132b and a fourth connecting end 132o; and the third-phase winding has a fifth connecting end 133c and a sixth connecting end 133o. As a connection mode, as shown in Fig. 2, the second connecting end 131o, the fourth connecting end 132o and the sixth connecting end 133o are connected to a neutral point O1.

The controller 140 is configured to send a first control signal, when the power circuit 110 accesses the first power supply 111, to the switches in the connecting circuit 120 so that the connecting circuit 120 has a first connection state in which a first number of windings are connected between the output anode 110a and the output cathode 110b, and send a second control signal, when the power circuit 110 accesses the second power supply 112, to the switches in the connecting circuit 120 so that the connecting circuit 120 has a second connection state in which a second number of windings are connected between the output anode 110a and the output cathode 110b. It should be noted, the first number of the windings may be a number different from that of the second number of the windings.

Specifically, when the power circuit 110 accesses the first power supply 111, e.g., 220V alternating current commercial power, the controller 140 sends the first control signal to the switches in the connecting circuit 120 so that the connecting circuit 120 has a first connection state in which two phase windings, e.g. the first-phase or first winding and the second-phase or second winding, are connected in series between the output anode 110a and the output cathode 110b; when the power circuit 110 accesses the second power supply 112, e.g., direct current, the controller 140 sends the second control signal to the switches in the connecting circuit 120 so that the connecting circuit 120 has a second connection state in which one phase winding,e.g. the first-phase or first winding is connected between the output anode 110a and the output cathode 110b.

In combination with Fig. 1 to Fig. 3, a work process of an angle grinder is illustrated by taking an example that the first power supply 111 accessed by the power circuit 110 is 220V alternating current commercial power and the second power supply 112 is direct current.

When the power circuit 110 accesses the alternating current commercial power, the controller 140 sends a control signal which enables the third switch K3 and the sixth switch K6 to be switched on, so that the third switch K3 and the sixth switch K6 in the connecting circuit 120 are switched on. Current output by the power circuit 110 successively flows through the input anode 120a, the third switch K3, the first-phase winding, the second-phase winding, the sixth switch K6 and the input cathode 120b so as to form a closed current loop so that the first winding 131 and the second winding 132 generate magnetomotive force in space; and magnetic fields of a stator and a rotor of the motor 130 interact so that the motor 130 rotates to convert electric energy into mechanical energy for output so as to drive the saw blade to operate. To facilitate description, a conduction state of the connecting circuit 120 when the third switch K3 and the sixth switch K6 are switched on is defined as K3K6, a driving state of the motor 130 when the first connecting end 131a is connected to the input anode 120a and the third connecting end 132b is connected to the input cathode 120b is defined as AB. Namely, the controller 140 sends a control signal which enables the third switch K3 and the sixth switch K6 to be switched on; the conduction state of the connecting circuit 120 is K3K6; and the driving state of the motor 130 is correspondingly AB.

The controller 140 sends a control signal which enables the fifth switch K5 and the fourth switch K4 to be switched on, so that the fifth switch K5 and the fourth switch K4 in the connecting circuit 120 are switched on, i.e., the conduction state of the connecting circuit 120 is K5K4. Current output by the power circuit 110 successively flows through the input anode 120a, the fifth switch K5, the second-phase winding 132, the fourth switch K4, the first-phase winding 131 and the input cathode 120b so as to form a closed current loop, i.e., the driving state of the motor 130 is correspondingly BA.

The power circuit 110 accesses the alternating current commercial power, and the controller 140 successively outputs different control signals to the switches in the connecting circuit 120 so as to change the driving state of the motor 130, so that the phase windings of the motor 130 are operated according to a certain order and then the motor 130 rotates to convert electric energy into mechanical energy for output so as to drive the saw blade to operate. Table 1 is a corresponding relationship table of the conduction states of the connecting circuit 120 and the driving states of the motor 130 within the duration of one period, i.e., the duration in which the rotor of the motor 130 rotates by one circle when the power circuit 110 accesses the alternating current commercial power. The controller 140 successively outputs corresponding control signals according to a sequence from top to bottom shown in Table 1.

**Table 1**

| Conduction State | Driving State |
|---|---|
| K3K6 | AB |
| K3K8 | AC |
| K5K8 | BC |
| K5K4 | BA |
| K7K4 | CA |
| K7K6 | CB |

It can be known from the above table that, when the power circuit 110 accesses the alternating current commercial power, the second connecting end 131o, the fourth connecting end 132o and the sixth connecting end 133o are connected to the neutral point O1 and the three phase windings form a star-shaped or Y-shaped connection.

When the power circuit 110 accesses the direct current, such as two 56V battery packs connected in parallel, the controller 140 outputs a control signal, which enables the third switch K3 and the second switch K2 to be switched on, to the connecting circuit 120 so that the third switch K3 and the second switch K2 are switched on. Current output by the power circuit 110 successively flows through the input anode 120a, the third switch K3, the first-phase winding, the second switch K2 and the input cathode 120b so as to form a closed current loop so that the first-phase winding generates magnetomotive force. Similarly, to facilitate description, the conduction state of the above connecting circuit 120 is defined as K3K2; and a state when the first connecting end 131a is connected to the input anode 120a and the second connecting end 131o (i.e., the neutral point O1) is connected to the input cathode 120b is defined as the driving state AO of the motor 130.

The controller 140 outputs a control signal, which enables the first switch K1 and the fourth switch K4 to be switched on, to the connecting circuit 120 so that the first switch K1 and the fourth switch K4 are switched on. Current output by the power circuit 110 successively flows through the input anode 120a, the first switch K1, the first-phase winding 131, the fourth switch K4 and the input cathode 120b. At this moment, the second connecting end 131o (i.e., the neutral point O1) is connected to the input anode 120a and the first connecting end 131a is connected to the input cathode 120b. The conduction state of the connecting circuit 120 is K1K4, and the driving state of the motor 130 is correspondingly OA.

Table 2 is a corresponding relationship table of the conduction states of the connecting circuit 120 and the driving states of the motor 130 within the duration of one period, i.e., the duration in which the rotor of the motor 130 rotates by one circle when the power circuit 110 accesses the direct current. The controller 140 successively outputs corresponding control signals to the connecting circuit 120 according to a sequence from top to bottom shown in Table 2, so as to drive the motor 130 to rotate. It can be known from Table 2 that, when the power circuit 110 accesses the direct current, e.g. from the battery pack, and the three phase windings form a triangle-shaped or A-shaped connection.

**Table 2**

| Conduction State | Driving State |
|---|---|
| K3K2 | AO |
| K1K8 | OC |
| K5K2 | BO |
| K1K4 | OA |
| K7K2 | CO |
| K1K6 | BO |

In the miter saw of the present embodiment, when the power circuit 110 accesses different power supplies, the controller 140 as a signal source responds to different accessed power supplies to output corresponding control signals to an electronic switch, thereby realizing switching of the driving states of the motor 130 between the different power supplies, ensuring that output properties of the motor 130 during accessing different power supplies are basically consistent, and enhancing use experience of the user. Meanwhile, the electronic switch realizes state switching when the motor 130 accesses different power supplies, thereby realizing low production cost and small space occupation of the electric tool, so that the integral structure of the electric tool is more compact. The output properties herein include a rotating speed, an output voltage, an output power and other property parameters of the motor 130.

It should be noted that if the first power supply 111 and the second power supply 112 accessed by the power circuit 110 are identical, and the power circuit 110 access the same voltage, output of different rotating speeds of the motor 130 can be apparently realized by adopting the connecting circuit 120 and the controller 140 in the present embodiment, thereby satisfying a demand on a working condition that the same motor 130 outputs different rotating speeds at the same voltage.

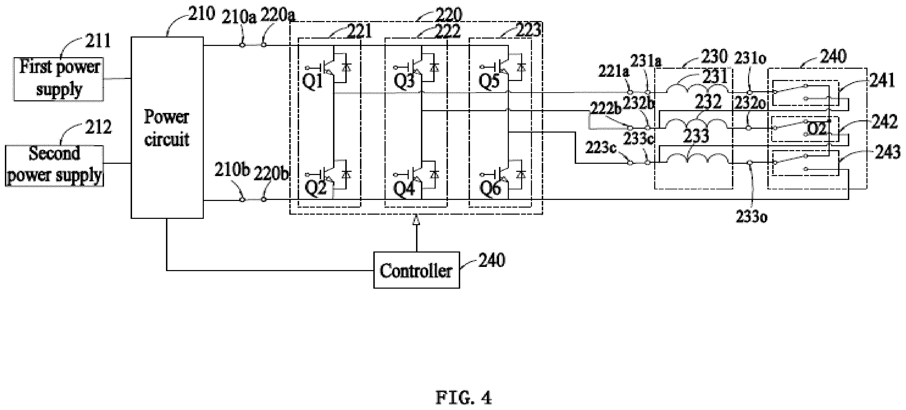

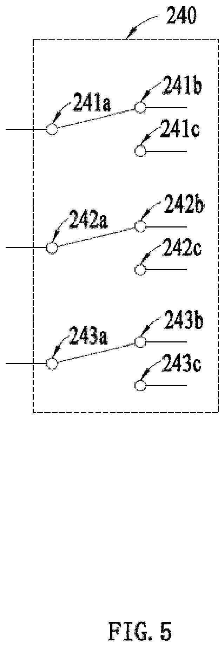

Refer to a schematic diagram illustrating an internal structure of a miter saw of another embodiment shown in Fig. 4 and Fig. 5. A difference from the embodiment shown in Fig. 2 and Fig. 3 is that, the miter saw further includes a relay 240 as one of signals sources. The connecting circuit 220 includes six electronic switches such as a first switch Q1, a second switch Q2, a third switch Q3, a fourth switch Q4, a fifth switch Q5 and a sixth switch Q6. A first terminal 221a is connected between the first switch Q1 and the second switch Q2. A second terminal 222b is connected between the third switch Q3 and the fourth switch Q4. A third terminal 223c is connected between the fifth switch Q5 and the sixth switch Q6.

The motor 230 includes a first-phase winding 231, a second-phase winding 232 and a third-phase winding 233. The first connecting end 231a of the first-phase winding 231 is connected with the first terminal 221a; the third connecting end 232b of the second-phase winding 232 is connected with the second terminal 222b; and the fifth connecting end 233c of the third-phase winding 233 is connected with the third connecting end 232b.

Specifically, the relay 240 includes a first relay 241, a second relay 242 and a third relay 243. Each relay 240 has one static contact and two movable contacts. One of the static contact and the two movable contacts is defined to be connected in a first contact state of the relay 240, and another one of the static contact and the two movable contacts is defined to be connected in a second contact state of the relay 240. The static contact of the first relay 241 is connected to the second connecting end 231o; the static contact of the second relay 242 is connected to the fourth connecting end 232o; and the static contact of the third relay 243 is connected to the sixth connecting end 233o.

A condition that the first power supply 211 accessed by the power circuit 210 is alternating current commercial power and the accessed second power supply 212 is direct current is illustrated below.

When the power circuit 210 accesses the alternating current commercial power, the first relay 241, the second relay 242 and the third relay 243 are in the first contact state. Namely, the first static contact 241a is connected to the second movable contact 241c; the second static contact 242a is connected to the fourth movable contact 242c; and the third static contact 243a is connected to the sixth movable contact 243c. Meanwhile, the controller outputs a control signal that enables the first switch Q1 and the fourth switch Q4 to be switched on so that the first connecting end 231a is connected to the output anode of the power circuit 210 and the third connecting end 232b is connected to the output cathode of the power circuit 210. In other words, the conduction state of the connecting circuit 220 is Q1Q4; and the driving state of the motor 230 is correspondingly AB. Similarly, the controller successively outputs corresponding control signals to the connecting circuit 220 according to a sequence from top to bottom shown in Table 3, so as to drive the motor 230 to rotate.

**Table 3**

| Conduction State | Driving State |
|---|---|
| Q1Q4 | AB |
| Q1Q6 | AC |
| Q3Q6 | BC |
| Q3Q2 | BA |
| Q6Q2 | CA |
| Q6Q4 | CB |

It can be known from Table 3 that when the power circuit 210 accesses the alternating current commercial power, the second connecting end 231o, the fourth connecting end 232o and the sixth connecting end 233o are connected to the neutral point O2 and the three phase windings form star-shaped connection. Namely, only the second connecting end 231o in two connecting ends of the first-phase winding 231 is connected to the second-phase winding 232 and the third-phase winding 233.

When the power circuit 210 accesses the direct current, the first relay 241, the second relay 242 and the third relay 243 are in the first contact state. Namely, the first static contact 241a is connected to the first movable contact 241b; the second static contact 242a is connected to the third movable contact 242b; and the third static contact 243a is connected to the fifth movable contact 243b. Meanwhile, the controller outputs a control signal that enables the first switch Q1 and the fourth switch Q4 to be switched on so that the first connecting end 231a is connected to the output anode of the power circuit 210 and the third connecting end 232b is connected to the output cathode of the power circuit 210. In other words, the conduction state of the connecting circuit 220 is Q1Q4; and the driving state of the motor 230 is correspondingly AB.

It should be noted that when the power circuit 210 accesses the direct current, the controller also successively outputs corresponding control signals to the connecting circuit 220 according to a sequence from top to bottom shown in Table 3, so as to drive the motor 230 to rotate. A difference from accessing the alternating current is that the three phase windings of the motor 230 form angular connection. Namely, two connecting ends of the first-phase winding 231 are respectively connected to one end of the second-phase winding 232 and the third-phase winding.

The miter saw in above embodiments can also realize the change of the driving states of the motor 230 when the power circuit 210 accesses different power supplies, so that the motor 230 has approximately the same output properties when switching between accessing two different power supplies.

The above shows and describes a basic principle, main features and advantages of the present disclosure. Those skilled in the art should understand that above embodiments do not limit the present disclosure in any form.

## Claims

1. An electric tool, comprising:
a motor (130, 230) comprising a first phase winding (131, 231), a second phase winding (132, 232) and a third phase winding (133, 233);
a power circuit (110, 210) configured to selectively connect a first power supply (111, 211) and a second power supply (112, 212) for supplying power for the motor and comprising an output anode (110a, 210a) and an output cathode (110b, 210b);
a connecting circuit (120, 220) comprising:
a first connecting circuit (121, 221) comprising a first switch (K1, Q1) and a second switch (K2, Q2), wherein one of two connecting ends of the first phase winding is connected between the first switch and the second switch;
a second connecting circuit (122, 222) comprising a third switch (K3, Q3) and a fourth switch (K4, Q4), wherein the other one of two connecting ends of the first phase winding is connected between the third switch and the fourth switch;
a third connecting circuit (123, 223) comprising a fifth switch (K5, Q5) and a sixth switch (K6, Q6), wherein one of two connecting ends of the second phase winding is connected between the fifth switch and the sixth switch; and
a fourth connecting circuit (124) comprising a seventh switch (K7) and an eighth switch (K8), wherein one of two connecting ends of the third phase winding is connected between the seventh switch and the eighth switch; and
a signal source configured to send a first control signal, when the power circuit accesses the first power supply, successively to the first switch, the second switch, the third switch, the fourth switch, the fifth switch, the sixth switch, the seventh switch and the eighth switch so that every two of the three phase windings are in sequence connected between the output anode and the output cathode, the three phase windings forming a Y-shaped connection, and send a second control signal, when the power circuit accesses the second power supply, successively to the first switch, the second switch, the third switch, the fourth switch, the fifth switch, the sixth switch, the seventh switch and the eighth switch so that each of the three phase windings are in sequence connected between the output anode and the output cathode, the three phase windings forming a triangle-shaped connection;
wherein the connecting circuit is electrically connected with the power circuit and the motor, and the signal source is electrically connected with the connecting circuit.

2. The electric tool according to claim 1, wherein
a voltage of the first power supply accessed by the power circuit is greater than a voltage of the second power supply accessed by the power circuit.

3. The electric tool according to claim 1, wherein
the first power supply accessed by the power circuit is an alternating current power supply, and the second power supply accessed by the power circuit is a direct current power supply.

4. The electric tool according to claim 1, wherein
the signal source comprises a controller (140) or a relay (240).

## Patentansprüche

1. Elektrowerkzeug, umfassend:
einen Motor (130, 230), der eine erste Phasenwicklung (131, 231), eine zweite Phasenwicklung (132, 232) und eine dritte Phasenwicklung (133, 233) umfasst;
einen Leistungskreis (110, 210), der zum selektiven Anschließen einer ersten Stromversorgung (111, 211) und einer zweiten Stromversorgung (112, 212) zur Zufuhr von Energie für den Motor ausgelegt ist und eine Ausgangsanode (110a, 210a) und eine Ausgangskatode (110b, 210b) umfasst;
eine Anschlussschaltung (120, 220), umfassend:
eine erste Anschlussschaltung (121, 221), die einen ersten Schalter (K1, Q1) und einen zweiten Schalter (K2, Q2) umfasst, wobei eines der zwei Anschlussenden der ersten Phasenwicklung zwischen dem ersten Schalter und dem zweiten Schalter angeschlossen ist;
eine zweite Anschlussschaltung (122, 222), die einen dritten Schalter (K3, Q3) und einen vierten Schalter (K4, Q4) umfasst, wobei eines der zwei Anschlussenden der ersten Phasenwicklung zwischen dem dritten Schalter und dem vierten Schalter angeschlossen ist;
eine dritte Anschlussschaltung (123, 223), die einen fünften Schalter (K5, Q5) und einen sechsten Schalter (K6, Q6) umfasst, wobei eines der zwei Anschlussenden der zweiten Phasenwicklung zwischen dem fünften Schalter und dem sechsten Schalter angeschlossen ist; und
eine vierte Anschlussschaltung (124), die einen siebenten Schalter (K7) und einen achten Schalter (K8) umfasst, wobei eines der zwei Anschlussenden der dritten Phasenwicklung zwischen dem siebenten Schalter und dem achten Schalter angeschlossen ist; und
eine Signalquelle, die dafür ausgelegt ist, ein erstes Steuersignal zu senden, wenn der Leistungskreis auf die erste Stromversorgung zugreift, nacheinander auf den ersten Schalter, den zweiten Schalter, den dritten Schalter, den vierten Schalter, den fünften Schalter, den sechsten Schalter, den siebenten Schalter und den achten Schalter, sodass jeweils zwei der drei Phasenwicklungen in Reihe zwischen der Ausgangsanode und der Ausgangskatode geschaltet sind, wobei die drei Phasenwicklungen eine Y-förmige Verbindung bilden, und ein zweites Steuersignal zu senden, wenn der Leistungskreis auf die zweite Stromversorgung zugreift, nacheinander auf den ersten Schalter, den zweiten Schalter, den dritten Schalter, den vierten Schalter, den fünften Schalter, den sechsten Schalter, den siebenten Schalter und den achten Schalter, sodass jede der drei Phasenwicklungen in Reihe zwischen der Ausgangsanode und der Ausgangskatode geschaltet ist, wobei die drei Phasenwicklungen eine dreieckige Verbindung bilden;
wobei die Anschlussschaltung elektrisch mit dem Leistungskreis und dem Motor verbunden ist, und die Signalquelle elektrisch mit der Anschlussschaltung verbunden ist.

2. Elektrowerkzeug nach Anspruch 1, wobei
eine Spannung der ersten Stromversorgung, auf die vom Leistungskreis zugegriffen wird, größer als eine Spannung der zweite Stromversorgung ist, auf die vom Leistungskreis zugegriffen wird.

3. Elektrowerkzeug nach Anspruch 1, wobei
die erste Stromversorgung, auf die vom Leistungskreis zugegriffen wird, eine Wechselstrom-Stromversorgung ist, und die zweite Stromversorgung, auf die vom Leistungskreis zugegriffen wird, eine Gleichstrom-Stromversorgung ist.

4. Elektrowerkzeug nach Anspruch 1, wobei
die Signalquelle einen Regler (140) oder ein Relais (240) umfasst.

## Revendications

1. Outil électrique, comprenant :
un moteur (130, 230) comprenant un premier bobinage de phase (131, 231), un deuxième bobinage de phase (132, 232) et un troisième bobinage de phase (133, 233) ;
un circuit électrique (110, 210) configuré pour connecter de manière sélective une première source de courant (111, 211) et une seconde source de courant (112, 212) pour fournir du courant électrique pour le moteur et comprenant une anode de sortie (110a, 210a) et une cathode de sortie (110b, 210b) ;
un circuit de connexion (120, 220) comprenant :
un premier circuit de connexion (121, 221) comprenant un premier commutateur (K1, Q1) et un deuxième commutateur (K2, Q2), dans lequel une des deux extrémités de connexion du premier bobinage de phase est connectée entre le premier commutateur et le seconde commutateur ;
un deuxième circuit de connexion (122, 222) comprenant un troisième commutateur (K3, Q3) et un quatrième commutateur (K4, Q4), dans lequel l'autre des deux extrémités de connexion du premier bobinage de phase est connectée entre le troisième commutateur et le quatrième commutateur ;
un troisième circuit de connexion (123, 223) comprenant un cinquième commutateur (K5, Q5) et un sixième commutateur (K6, Q6), dans lequel une des deux extrémités de connexion du deuxième bobinage de phase est connectée entre le cinquième commutateur et le sixième commutateur ; et
un quatrième circuit de connexion (124) comprenant un septième commutateur (K7) et un huitième commutateur (K8), dans lequel une des deux extrémités de connexion du troisième bobinage de phase est connectée entre le septième commutateur et le huitième commutateur ; et
une source de signal configurée pour envoyer un premier signal de commande, lorsque le circuit électrique accède à la première source de courant, successivement au premier commutateur, deuxième commutateur, troisième commutateur, quatrième commutateur, cinquième commutateur, sixième commutateur, septième commutateur et huitième commutateur de façon ce que chaque deux des trois bobinages de phase soient connectés en séquence entre l'anode de sortie et la cathode de sortie, les trois bobinages de phase formant une connexion en Y, et envoyer un deuxième signal de commande, lorsque le circuit électrique accède à la deuxième source de courant, successivement au premier commutateur, deuxième commutateur, troisième commutateur, quatrième commutateur, cinquième commutateur, sixième commutateur, septième commutateur et huitième commutateur de façon ce que chacun des trois bobinages de phase soit connecté en séquence entre l'anode de sortie et la cathode de sortie, les trois bobinages de phase formant une connexion triangulaire ;
dans lequel le circuit de connexion est connecté électriquement au circuit électrique et au moteur, et la source de signal est connectée électriquement au circuit de connexion.

2. Outil électrique selon la revendication 1, dans lequel
une tension de la première source de courant à laquelle le circuit électrique a accédé est supérieure à une tension de la deuxième source de courant électrique à laquelle le circuit électrique a accédé.

3. Outil électrique selon la revendication 1, dans lequel
la première source de courant à laquelle le circuit électrique a accédé est une source de courant alternatif et la seconde source de courant à laquelle le circuit électrique a accédé est une source de courant continu.

4. Outil électrique selon la revendication 1, dans lequel la source de signal comprend une commande (140) ou un relais (240).
